# EUROPÄISCHE PATENTSCHRIFT

(11) **EP 0 561 171 B1**
(45) Veröffentlichungstag und Bekanntmachung des Hinweises auf die Patenterteilung: **26.07.1995**
(21) Anmeldenummer: 93102599.3
(22) Anmeldetag: 19.02.1993
(51) Int. Cl.: B60T 11/32, B60T 17/04

(54) **Mehrkreis-Schutzventil**
Multi-circuit protection valve
Valve de protection pour plusieurs circuits

(30) Priorität: 20.03.1992 DE 4209034
(43) Veröffentlichungstag der Anmeldung: 22.09.1993
(73) Patentinhaber: ROBERT BOSCH GMBH, 70442 Stuttgart (DE)
(72) Erfinder: Siebold, Manfred, Ing.(FH), W-7060 Boeblingen (DE); Roennefarth, Klaus, W-7000 Stuttgart 30 (DE); Muhr, Ulrich, Dipl.-Ing.(FH), W-7901 Illerkirchberg (DE); Karcher, Peter, W-7000 Stuttgart 70 (DE)

(56) Entgegenhaltungen:
- DE-B- 2 143 733
- DE-B- 2 558 844
- DE-C- 4 109 741
- FR-A- 2 190 652

## Beschreibung

### Stand der Technik

Die Erfindung geht aus von einem Mehrkreis-Schutzventil nach der Gattung des Hauptanspruchs. Solche Mehrkreis-Schutzventile sind bei Druckluft-Bremsanlagen von Kraftfahrzeugen vor den Luftbehältern angeordnet, aus denen die verschiedenen Bremskreise der Bremsanlage mit Druckluft versorgt werden. Zwei dieser Bremskreise sind die Betriebsbremskreise, weitere Verbraucherkreise sind der Feststellbremskreis und ein Nebenverbraucherkreis.

Eine Änderung einer EG-Richtlinie sieht nun vor, daß sich während des Wiederauffüllens der Bremsanlage mit Druckluft von einem Druckwert Null an Federspeicherbremsen nicht eher lösen dürfen, bis der Druck in den Betriebsbremskreisen hinreichend hoch ist, um bei beladenem Fahrzeug sicherzustellen, daß die Betriebsbremse mindestens die Hilfsbremswirkung aufbringt. Diese Forderung bedingt, daß die beiden Betriebsbremskreise zuerst aufgefüllt werden müssen.

Es ist schon ein derartiges Mehrkreis-Schutzventil (DE 25 53 818 A1) bekannt, bei dem das Öffnen der Überströmventile für die Betriebsbremskreise unterstützt wird, indem das Ventilschließglied dieser Überströmventile auch durch die Bypassleitung druckbeaufschlagt wird. Aufgrund der gegenüber der Dichtfläche größeren, sekundärseitigen Wirkfläche des Ventilschließgliedes sinkt der Öffnungsdruck der Überströmventile rascher, so daß durch höheren Luftdurchsatz eine bevorrechtigte Befüllung der Betriebsbremskreise gegenüber den übrigen Kreisen erzielt wird. Ein Rückschlagventil in der jeweiligen Bypassleitung verhindert bei einem Kreisausfall das Abfallen des Vorratsdruckes in intakten Kreisen auf Null bar Druck.

Bei dieser bekannten Ausführungsform bereitet jedoch das Auffüllen einer ein Leck aufweisenden Bremsanlage vom Druck Null bar an Schwierigkeiten, da im defekten Kreis Druckluft nicht nur über das Überströmventil sondern auch durch die Bypassleitung abströmt. In ungünstigen Fällen kann dabei das Fördervolumen eines die Druckluft bereitstellenden Luftkompressors nicht ausreichen, um einen für das Öffnen des Überströmventils der intakten Kreise ausreichenden Staudruck aufzubauen. Einer dem entgegenwirkenden Verkleinerung des Drosselquerschnitts in der Bypassleitung sind jedoch Grenzen gesetzt.

### Vorteile der Erfindung

Das erfindungsgemäße Mehrkreis-Schutzventil mit den kennzeichnenden Merkmalen des Hauptanspruchs hat demgegenüber den Vorteil, daß ein Abströmen von Druckluft durch die Bypassleitung eines defekten Betriebsbremskreises selbsttätig unterbunden wird, weil der im intakten Betriebsbremskreis herrschende Druck das völlige Schließen der Bypassleitung bewirkt. Im intakten Betriebsbremskreis bleibt dagegen die Bypassleitung durchlässig so daß die vom Luftkompressor geförderte Druckluft weiterhin das Öffnen des Überströmventils dieses Kreises unterstützt und eine Befüllung des Kreises sicherstellt. Dabei zeichnet sich diese Lösung durch einen sehr einfachen Aufbau mit wenigen Einzelteilen aus, da der Wiegekolben im Zusammenwirken mit dem entsprechenden Schließkörper des jeweiligen Rückschlagsventils die Bypassleitung des defekten Kreises sperrt.

Durch die in den Unteransprüchen aufgeführten Maßnahmen sind vorteilhafte Weiterbildungen und Verbesserungen des im Hauptanspruch angegebenen Mehrkreis-Schutzventils möglich.

Es ist zwar ein Zweikreis-Schutzventil für Druckluftbremsanlagen bekannt (DE-PS 1 176 500), bei dem die beiden Bremskreisen zugeführte Druckluft über einen Wiegekolben an die Kreise verteilt wird. Dieser Wiegekolben ist beiderseits mit Rückschlagventilen versehen, um eine Rückströmung von Druckluft vom Kreis höheren Drucks in den ggf. undichten Kreis niedrigeren Drucks zu verhindern. Außerdem arbeitet der Wiegekolben mit zu dessen beiden Stirnseiten angeordneten Ventilsitzen in zu den beiden Kreisen führenden Leitungszweigen zusammen. Weist nämlich ein Kreis ein Leck auf, so bewirkt der Druck im anderen Kreis eine Verschiebung des Wiegekolbens gegen den Ventilsitz des defekten Kreises und sperrt diesen ab, so daß der andere, intakte Kreis mit Druckluft versorgt werden kann. Dennoch bleibt eine Verbindung zum undichten Kreis erhalten, da das jeweilige Rückschlagventil und der entsprechende Ventilsitz mit Bypassbohrungen kleinen Durchmessers überbrückt sind. Dieses bekannte Schutzventil weist einen gegenüber dem erfindungsgemäßen Mehrkreis-Schutzventil anderen Aufbau auf und hat eine abweichende Funktion. Es besitzt keine Überströmventile und seine zu den einzelnen Kreisen führenden Bypassleitungen sind nicht absperrbar.

### Zeichnung

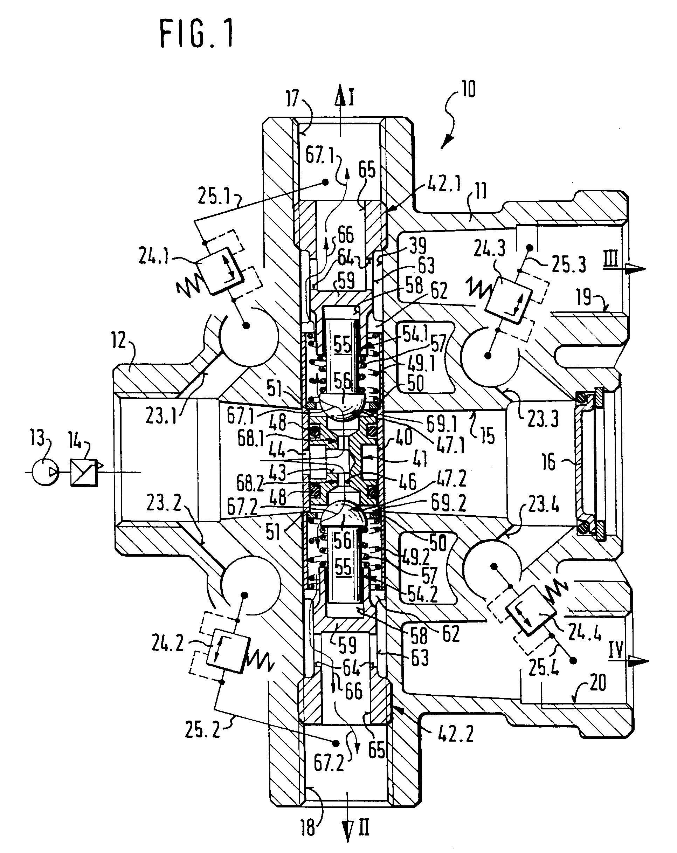

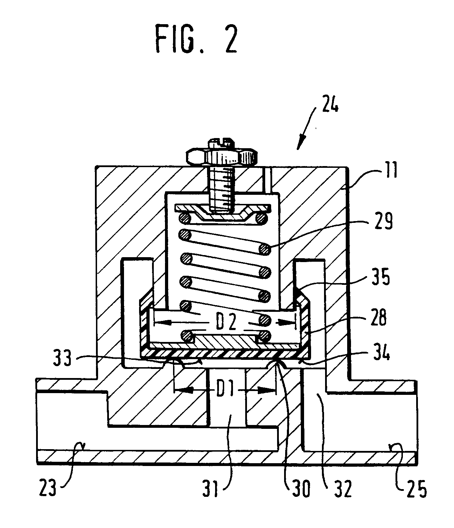

Ein Ausführungsbeispiel der Erfindung ist in der Zeichnung vereinfacht dargestellt und in der nachfolgenden Beschreibung näher erläutert. Es zeigen Figur 1 ein Schnittbild eines zentral angeströmten Vierkreis-Schutzventils mit als Symbol gezeichneten Überströmventilen, von denen zwei Überströmventile von je einer absperrbaren Bypassleitung überbrückt sind, und Figur 2 einen Schnitt durch ein vereinfacht dargestelltes Überströmventil.

### Beschreibung des Ausführungsbeispiels

Das in Figur 1 im Schnitt wiedergegebene Mehrkreis-Schutzventil ist als Vierkreis-Schutzventil 10 für eine nicht dargestellte pneumatische Mehrkreis-Bremsanlage eines Kraftfahrzeugs ausgebildet. Das Vierkreis-Schutzventil 10 besitzt ein Gehäuse 11 mit einem Anschlußstutzen 12 für einen als Symbol dargestellten Luftkompressor 13 als Druckmittelquelle. Zwischen dem Luftkompressor 13 und dem Anschlußstutzen 12 ist als Symbol ein Druckregler 14 angegeben. Das Vierkreis-Schutzventil 10 weist eine vom Anschlußstutzen 12 ausgehende, das Gehäuse 11 durchdringende Bohrung 15 auf, welche an ihrem vom Anschlußstutzen abgewandten Ende durch einen Deckel 16 dicht verschlossen ist. Das Gehäuse 11 ist mit einer ersten Anschlußbohrung 17 für einen Betriebsbremskreis I der Bremsanlage versehen. Im Gehäuse 11 gegenüberliegend steht eine zweite Anschlußbohrung 18 mit einem zweiten Betriebsbremskreis II in Verbindung. An eine dritte Anschlußbohrung 19 ist ein Feststellbremskreis III, an eine vierte Anschlußbohrung 20 ein Nebenverbraucherkreis IV der Bremsanlage angeschlossen.

Von der Gehäusebohrung 15 des Vierkreis-Schutzventils 10 zweigen paarweise Zuströmkanäle 23.1 bis 23.4 zu lediglich als Symbol dargestellten Überströmventilen 24.1 bis 24.4 ab, die durch als Linienzug angedeutete Abströmkanäle 25.1 bis 25.4 mit den zugeordneten Anschlußbohrungen 17 bis 20 der entsprechenden Kreise I bis IV in Verbindung stehen. Da die Überströmventile 24.1 bis 24.4 unterhalb der Zeichenebene verdeckt im Gehäuse 11 des Vierkreis-Schutzventils 10 liegen, ist der Aufbau eines solchen Ventils in Figur 2 vereinfacht wiedergegeben.

Das in Figur 2 dargestellte Überströmventil 24 besitzt ein topfmanschettenförmiges Ventilschließglied 28, welches durch eine vorgespannte Druckfeder 29 belastet ist. Das Ventilschließglied 28 ist in der gezeichneten Ruhestellung auf einem ringförmigen Ventilsitz 30 des Gehäuses 11 abgestützt. Das Ventilschließglied 28 und der Ventilsitz 30 trennen eine im Zuge des Zuströmkanals 23 liegende Primärseite 31 von einer dem Abströmkanal 25 zugeordneten Sekundärseite 32 des Überströmventils 24. Dabei begrenzt der Ventilsitz 30 eine durch den Durchmesser D1 definierte, primärseitige Dichtfläche 33 (Primärfläche). Außerdem ist dem Ventilschließglied 28 eine sekundärseitige Wirkfläche 34 (Sekundärfläche) zugeordnet, welche als Kreisringfläche zwischen dem Durchmesser D1 und dem wirksamen Durchmesser D2 einer Dichtlippe 35 des Ventilschließglieds 28 definiert ist. Das für alle vier Kreise I bis IV baugleiche Überströmventil 24 besitzt aufgrund dieser Bemessung der primärseitigen Dichtfläche 33 sowie der sekundärseitigen Wirkfläche 34 eine als sekundärseitige Beeinflussung bezeichnete Charakteristik, d.h. beim Überströmen von Druckluft von der Primärseite 31 auf die Sekundärseite 32 oder durch einen auf andere Weise auf der Sekundärseite erzeugten Druckaufbau entsteht auf letzterer eine an der Wirkfläche 34 angreifende, das Öffnen des Überströmventils 24 unterstützende Kraft am Ventilschließglied 28 auf, so daß aufgrund dieser Kraft der Öffnungsdruck des Überströmventils 24 sinkt.

Wie in Figur 1 ersichtlich, ist die Gehäusebohrung 15 von einer die Anschlußbohrungen 17 und 18 für die Betriebsbremskreise I und II verbindenden Querbohrung 39 gekreuzt. In der Querbohrung 39 ist eine Führungshülse 40 für einen Wiegekolben 41 passend aufgenommen. Die Führungshülse 40 hat einen kleineren Durchmesser als die Gehäusebohrung 15 im Kreuzungsbereich, so daß die zentrale Anströmung aller Überströmventile 24.1 bis 24.4 durch die Gehäusebohrung 15 gegeben ist. Die Führungshülse 40 ist mit in die jeweilige Anschlußbohrung 17 bzw. 18 bzw. die Querbohrung 39 eingeschraubten Stützhülsen 42.1 bis 42.2 axial fixiert. Der Wiegekolben 41, welcher in Figur 1 seine von Kräften freie Mittelstellung einnimmt, besitzt eine radial verlaufende, stumpf endende Zuströmbohrung 43. Diese steht durch eine im Querschnitt der Gehäusebohrung 15 liegende Öffnung 44 der Führungshülse 40 mit der Druckmittelquelle 13 in Verbindung. Die Zuströmbohrung 43 mündet in eine axiale Durchgangsbohrung 46 des Wiegekolbens 41. Die Durchgangsbohrung 46 ist mit Abstand zur Zustrombohrung 43 aufgeweitet und endet an beiden Stirnseiten des Wiegekolbens 41 in Ventilsitzen 47.1 und 47.2. Außerdem ist der Wiegekolben 41 umfangsseitig mit beiderseits der Zuströmbohrung 43 angeordneten Dichtungsringen 48 für die Abdichtung gegenüber der Führungshülse 40 versehen. Diese Anordnung erlaubt jedoch eine reibungsarme Längsbewegung des Wiegekolbens 41 in der Führungshülse 40. Beiden Stirnseiten des Wiegekolbens 41 sind vorgespannte Druckfedern 49.1 und 49.2 zugeordnet. Die jeweilige in der Führungshülse 40 aufgenommene Druckfeder 49.1 bzw. 49.2 ist einerseits an der zugeordneten Stützhülse 42.1 bzw. 42.2 abgestützt; andererseits greift sie an einem Stützring 50 an, welcher aufgrund der Federkraft an einer Bohrungsstufe 51 der Führungshülse 40 anliegt. In der gezeichneten Mittelstellung des Wiegekolbens 41 verbleibt ein geringer Abstand zwischen dessen Stirnseiten und den Stützringen 50. Abweichend hiervon können die vorgespannten Druckfedern 49.1 und 49.2 auch unmittelbar an der entsprechenden Stirnseite des Wiegekolbens 41 angreifen.

Gleichachsig zum entsprechenden Ventilsitz 47.1 bzw. 47.2 des Wiegekolbens 41 ist in jeder Stützhülse 42.1 zw. 42.2 ein Schließkörper 54.1 bzw. 54.2 mit seinem zylindrischen Schaft 55 aufgenommen. Der jeweilige Schließkörper 54 besitzt einen halbkugelförmigen Dichtteil 56, mit dem er unter Federkraft am zugeordneten Ventilsitz 47.1 bzw. 47.2 des Wiegekolbens 41 angreift. Die Federkraft ist durch eine den Schaft 55 des Schließkörpers 54.1 bzw. 54.2 umhüllende, vorgespannte Druckfeder 57 erzeugt, welche sich einerseits gegen den Dichtteil 56 und andererseits gegen die Stützhülse 42.1 bzw. 42.2 abstützt. Die Druckfeder 57 weist eine niedrigere Vorspannkraft sowie geringere Federkonstante auf als die dem Wiegekolben 41 zugeordneten Druckfedern 49.1 und 49.2. Der Hub des mit seinem Schaft 55 in einer Längsbohrung 58 der entsprechenden Stützhülse 42.1 bzw. 42.2 längsgeführten Schließkörpers 54.1 bzw. 54.2 ist durch einen als Anschlag wirkenden Boden 59 der Stützhülse 42.1 bzw. 42.2 begrenzt. Dieser gegen den Anschlag mögliche Hub der am Wiegekolben 41 angreifenden Schließkörper 54.1 und 54.2 ist größer als der Abstand zwischen den Stirnseiten des Wiegekolbens und den an den Bohrungsstufen 51 anliegenden Stützringen 50, d.h. bei aus der Mittelstellung heraus ausgelenktem und an einem Stützring 50 zum Anschlag gebrachtem Wiegekolben 41 verbleibt ein das Abheben des jeweiligen Schließkörpers 54.1 bzw. 54.2 vom Ventilsitz 47.1 bzw. 47.2 des Wiegekolbens 41 erlaubender Resthub. Bei einer weiteren Auslenkung des Wiegekolbens 41 entgegen der Kraft der entsprechenden Druckfeder 49.1 bzw. 49.2 wird der Hub des Wiegekolbens jedoch durch das Anschlagen des jeweiligen Schließkörpers 54.1 bzw. 54.2 am Boden 59 der Stützhülse 42.1 bzw. 42.2 begrenzt.

Die Stützhülsen 42.1 und 42.2 sind mit von Ausfräsungen 62, einer Umfangsnut 63, Querbohrungen 64 und einer auf den Boden 59 folgenden Längsbohrung 65 gebildeten Durchgängen für Druckluft versehen, so daß jeweils eine das Innere der Führungshülse 40 mit den Anschlußbohrungen 17 bzw. 18 für die beiden Betriebsbremskreise I bzw. II jeweils verbindende Leitung 66 erzeugt ist. Zusammen mit der Öffnung 44 in der Führungshülse 40, der Zuströmbohrung 43 und der Durchgangsbohrung 46 im Wiegekolben 41 bildet diese Leitungsverbindung 66 jeweils eine das zugeordnete Überströmventil 24.1 bzw. 24.2 der Betriebsbremskreise I bzw. II überbrückende Bypassleitung 67.1 bzw. 67.2, in der in Reihe eine von der Durchgangsbohrung 46 des Wiegekolbens 41 gebildete Drossel 68.1 bzw. 68.2 sowie ein aus dem Ventilsitz 47.1 bzw. 47.2 des Wiegekolbens 41 und dem Schließkörper 54.1 bzw. 54.2 mit Druckfeder 57 bestehendes Rückschlagventil 69.1 bzw. 69.2 liegen.

Das Vierkreis-Schutzventil 10 hat folgende Wirkungsweise:
Beim Füllen der nicht gezeichnete Vorratsluftbehälter gleichen Volumens aufweisenden Kreise I bis IV der Bremsanlage mit vom Luftkompressor 13 gelieferter Druckluft wird auf der Primärseite 31 der Überströmventile 24.1 bis 24.4 ein Staudruck erzeugt, der bei leerer Anlage zunächst bei geringen Fördermengen nicht zum Öffnen der Überströmventile ausreicht. Die Druckluft vermag jedoch die auf sehr niedrigen Öffnungsdruck eingestellten Rückschlagventile 69.1 und 69.2 in der Bypassleitung 67.1 bzw. 67.2 zu öffnen, so daß in beiden Betriebsbremskreisen I und II auf der Sekundärseite 32 der Überströmventile 24.1 bzw. 24.2 ein Druck aufgebaut wird. Aufgrund der sekundärseitigen Beeinflussung sinkt der Öffnungsdruck an diesen beiden Überströmventilen 24.1 und 24.2, so daß diese bevorzugt öffnen und die Betriebsbremskreise I und II vorrangig befüllt werden. Erst wenn die Druckhöhe in den Betriebsbremskreisen I und II den Öffnungsdruck der den Kreisen III und IV zugeordneten Überströmventile 24.3 und 24.4 erreicht hat, öffnen auch diese und der Feststellbremskreis III sowie der Nebenverbraucherkreis IV werden befüllt. Bei geschlossenen Überströmventilen 24.1 und 24.2 der Betriebsbremskreise I oder II verhindert das entsprechende Rückschlagventil 69.1 bzw. 69.2 ein Rückströmen von Druckluft aus den Bremskreisen durch die Bypassleitungen 67.1 bzw. 67.2.

Bei einer Bremsanlage mit unterschiedlichem Aufnahmevolumen in den Betriebsbremskreisen I und II verläuft das Auffüllen mit Druckluft wie folgt:
Die dem Vierkreis-Schutzventil 10 zugeführte Druckluft baut, wie vorausgehend beschrieben, durch die Bypassleitungen 67.1 und 67.2 in den Betriebsbremskreisen I und II Druck auf. Aufgrund der ungleichen Volumina steigt der Druck in den beiden Kreisen I und II unterschiedlich an. Dabei sei vorausgesetzt, daß der Betriebsbremskreis II das zweifache Volumen des Betriebsbremskreises I aufweise. Aufgrund der sich an beiden Stirnseiten des Wiegekolbens 41 ausbildenden Druckdifferenz wird dieser in Richtung auf die Anschlußbohrung 18 des Betriebsbremskreises II ausgelenkt. Dabei bewegen sich die Schließkörper 54.1 und 54.2 der Rückschlagventile 69.1 und 69.2 mit dem Wiegekolben 41. Bei weiterhin die Rückschlagventile 69.1 und 69.2 überwindender Druckluftströmung in die beiden Betriebsbremskreise I und II bewirkt der im Kreis I schneller ansteigende Druck einen Auslenkhub des Wiegekolbens 41 entgegen der Kraft der Druckfeder 49.2. Dieser Auslenkhub wird durch Anschlagen des Schließkörpers 54.2 am Boden 59 der Stützhülse 42.2 begrenzt, was das Schließen des Rückschlagventils 69.2 und das Sperren der Bypassleltung 67.2 zur Folge hat. Es wird jetzt nur noch der Betriebsbremskreis I durch die Bypassleitung 67.1 mit Druckluft versorgt, so daß das diesem Kreis zugeordnete Überströmventil 24.1 öffnet und ein Auffüllen des Betriebsbremskreises I erfolgt. Die Druckfedern 49.1 und 49.2 sind so ausgelegt, daß sie das Schließen der Bypassleitungen 67.1 und 67.2 dann bewirken, wenn sich eine Druckdifferenz zwischen den beiden Kreisen I und II einstellt, die etwa dem halben Öffnungsdruck der Überströmventile 24.1 und 24.2 entspricht. Beim Erreichen des aufgrund der teilweisen Befüllung des Betriebsbremskreises II ebenfalls verminderten Öffnungsdruckes des zugeordneten Überströmventils 24.2 erfolgt danach auch die Befüllung dieses volumengrößeren Kreises. Wenn in den beiden Betriebsbremskreisen I und II der gleiche Druck erreicht wird, stellt sich auch Druckgleichheit an den beiden Stirnseiten des Wiegekolbens 41 ein, so daß dieser von der Druckfeder 49.2 in seine Mittelstellung zurückgeführt wird. Damit ist auch das Rückschlagventil 69.2 wieder funktionsfähig. Wenn bei der weiteren Druckluftzuführung der Öffnungsdruck der Überströmventile 24.3 und 24.4 der Kreise III und IV erreicht wird, erfolgt auch die Befüllung dieser Kreise.

Damit ist die vorrangige Befüllung der Betriebsbremskreise I und II auch für diesen Anwendungsfall sichergestellt, so daß in diesen Kreisen ein ausreichend hoher Druck erreicht wird, bei dem die Betriebsbremse mindestens die Hilfsbremswirkung aufbringt bevor die Feststellbremse gelöst werden kann.

Im Falle eines z.B. durch ein Leck defekten Betriebsbremskreises I erfolgt das Auffüllen der Bremsanlage mit Druckluft wie folgt:
Die vom Luftkompressor 13 an das Vierkreis-Schutzventil 10 abgegebene Druckluft strömt über die beiden Bypassleitungen 67.1 und 67.2 in die Betriebsbremskreise I und II. Im intakten Betriebsbremskreis II baut sich auf der Sekundärseite 32 des Überströmventils 24.2 ein Druck auf. Aufgrund des Lecks bleibt dagegen die Sekundärseite 32 des dem Kreis I zugeordneten Überströmventils 24.1 drucklos. Dabei strömt über die Drossel 68.1 im Wiegekolben 41 eine begrenzte Menge an Druckluft ins Freie, jedoch vermag ein Luftkompressor 13 geringer Kapazität in diesem Betriebszustand ausreichend Druckluft für die Befüllung des intakten Kreises II bereitzustellen. Der sich im Betriebsbremskreis II nun steigernde Druck bewirkt eine Verschiebung des Wiegekolbens 41 aus seiner Mittelstellung heraus in Richtung auf die Anschlußbohrung 17 des Kreises I. Mit zunehmendem Auslenkhub des Wiegekolbens 41 wird schließlich gegen die Druckfeder 49.1 eine Sperrung des Rückschlagventiles 69.1 erreicht und damit ein Abströmen von Druckluft durch die Bypassleitung 67.1 in den defekten Kreis I verhindert. Nun wird mit dem Erreichen des Öffnungsdrucks des sekundärseitig unterstützten Überströmventils 24.2 des Betriebsbremskreises II dieser bevorzugt aufgefüllt. Anschließend erfolgt bei Erreichen des Öffnungsdruckes der den Kreisen III und IV zugeordneten Überströmventile 24.3 und 24.4 auch das Befüllen dieser Kreise.

Damit ist auch hier sichergestellt, daß bei einem Defekt eines Betriebsbremskreises und druckloser Bremsanlage die verbleibenden intakten Kreise sicher wieder aufgefüllt werden können.

## Patentansprüche

1. Mehrkreis-Schutzventil (10) für pneumatische Mehrkreis-Bremsanlagen, insbesondere von Kraftfahrzeugen mit wenigstens zwei Betriebsbremskreisen (I, II) und wenigstens einem Feststellbremskreis und/bzw. Nebenverbraucherkreis (III, IV), wobei alle Kreise von einer Druckmittelquelle (Luftkompressor 13) über je ein Überströmventil (24.1 bis 24.4) mit sekundärseitiger Beeinflussung mit Druckluft versorgt werden, von denen die den Betriebsbremskreisen (I, II) zugeordneten Überströmventile (24.1, 24.2) je mit einer Bypassleitung (67.1, 67.2) überbrückt sind, in der in Reihe eine Drossel (68.1, 68.2) und ein Rückschlagventil (69.1, 69.2) liegen,
gekennzeichnet durch die Merkmale:
- eine die Druckmittelquelle (Luftkompressor 13) mit den Überströmventilen (24.1 bis 24.4) verbindende Bohrung (15) im Gehäuse (11) des Mehrkreis-Schutzventils (10) steht mit einem Wiegekolben (41) in Verbindung, dessen beiden Stirnseiten vorgespannte Druckfedern (49.1, 49.2) zugeordnet sind,
- der Wiegekolben (41) ist mit einer radialen Zuströmbohrung (43) versehen, welche in eine axiale Durchgangsbohrung (46) mit endseitigen Ventilsitzen (47.1, 47.2) für am Wiegekolben angreifende Schließkörper (54.1, 54.2) der Rückschlagventile (69.1, 69.2) mündet,
- abströmseitig der Rückschlagventile (69.1, 69.2) ist je eine zu den Betriebsbremskreisen (I, II) führende Leitungsverbindung (66) vorgesehen,
- ein Auslenkhub des Wiegekolbens (41) aus seiner Mittelstellung ist durch einen Anschlag (Boden 59) für den jeweiligen Schließkörper (54.1, 54.2) der Rückschlagventile (69.1, 69.2) begrenzt.

2. Mehrkreis-Schutzventil nach Anspruch 1, gekennzeichnet durch die Merkmale:
- die Gehäusebohrung (15) ist von einer Anschlußbohrungen (17, 18) für die beiden Betriebsbremskreise (I, II) verbindenden Querbohrung (39) gekreuzt,
- in der Querbohrung (39) ist eine Führungshülse (40) für den Wiegekolben (41) passend aufgenommen, dessen Zuströmbohrung (43) mit einer im Querschnitt der Gehäusebohrung (15) liegenden Öffnung (44) der Führungshülse in Verbindung steht,
- der Wiegekolben (41) ist mit beiderseits der Zuströmbohrung (43) angeordneten Dichtungsringen (48) längsbewegbar in der Führungshülse (40) geführt,
- die Führungshülse (40) ist beidendig an in die Querbohrung (39) eingeschraubten Stützhülsen (42.1, 42.2) abgestützt,
- die dem Wiegekolben (41) zugeordneten Druckfedern (49.1, 49.2) greifen wiegekolbenabgewandt an der zugeordneten Stützhülse (42.1, 42.2) an,
- in der jeweiligen Stützhülse (42.1, 42.2) ist der zugeordnete Schließkörper (54.1, 54.2) des entsprechenden Rückschlagventils (69.1, 69.2) gleichachsig zum Wiegekolben (41) gegen Federkraft längsbewegbar aufgenommen,
- die Stützhülsen (42.1, 42.2) sind mit das Innere der Führungshülse (40) mit den Anschlußbohrungen (17, 18) für die beiden Betriebsbremskreise (I, II) verbindenden Durchgängen (Ausfräsungen 62, Umfangsnut 63, Querbohrungen 64, Längsbohrung 65) für die Druckluft versehen.

3. Mehrkreis-Schutzventil nach Anspruch 2, dadurch gekennzeichnet, daß die Rückschlagventile (69.1, 69.2) einen Schließkörper (54.1, 54.2) mit einem zylindrischen Schaft (55) haben, der in der Stützhülse (42.1, 42.2) längsgeführt ist und umfangsseitig eine Druckfeder (57) trägt, die einerseits an der Stützhülse und andererseits an einem wiegekolbenseitigen Dichtteil (56) des Schließkörpers angreift.

4. Mehrkreis-Schutzventil nach Anspruch 3, dadurch gekennzeichnet, daß ein Boden (59) der Stützhülse (42.1, 42.2) den Anschlag für den Schaft (55) des Schließkörpers (54.1, 54.2) des Rückschlagventils (69.1, 69.2) bildet.

5. Mehrkreis-Schutzventil nach Anspruch 1, dadurch gekennzeichnet, daß die axiale Durchgangsbohrung (46) des Wiegekolbens (41) die Drosseln (68.1, 68.2) bildet.

## Claims

1. Multi-circuit protection value (10) for pneumatic multi-circuit brake systems, especially those of motor vehicles, having at least two service brake circuits (I, II) and at least one parking brake circuit and/or secondary load circuit (III, IV), all the circuits being supplied with compressed air by one pressure-medium source (air compressor 13) via a respective overflow valve (24.1 to 24.4) with secondary-side influencing, of which overflow valves those (24.1, 24.2) assigned to the service brake circuits (I, II) are each bypassed by a bypass line (67.1, 67.2) in which a restriction (68.1, 68.2) and a nonreturn valve (69.1, 69.2) are arranged in series, characterized by the following features:
- a bore (15) in the housing (11) of the multi-circuit protection valve (10), said bore connecting the pressure-medium source (air compressor 13) to the overflow valves (24.1 to 24.4), is connected to a balanced piston (41), the two ends of which are assigned preloaded compression springs (49.1, 49.2),
- the balanced piston (41) is provided with a radial inlet bore (43) which opens into an axial through bore (46) with valve seats (47.1, 47.2) at the ends for closing elements (54.1, 54.2), engaging on the balanced piston, of the nonreturn valves (69.1, 69.2),
- a respective conduit connection (66) leading to each of the service brake circuits (I, II) is provided downstream of the nonreturn valves (69.1, 69.2),
- a deflection stroke of the balanced piston (41) out of its centre position is limited by a stop (bottom 59) for the respective closing element (54.1, 54.2) of the nonreturn valves (69.1, 69.2).

2. Multi-circuit protection valve according to Claim 1, characterized by the following features:
- the housing bore (15) is intersected by a transverse bore (39) connecting connection bores (17, 18) for the two service brake circuits (I, II),
- accommodated in a well-fitting manner in the transverse bore (39) is a guide sleeve (40) for the balanced piston (41), the inlet bore (43) of which is connected to a guide-sleeve opening (44) situated in the cross-section of the housing bore (15),
- the balanced piston (41) is guided in longitudinally displaceable fashion in the guide sleeve (40) by means of sealing rings (48) arranged on both sides of the inlet bore (43),
- the guide sleeve (40) is supported at both ends on supporting sleeves (42.1, 42.2) screwed into the transverse bore (39),
- the compression springs (49.1, 49.2) assigned to the balanced piston (41) engage on the associated supporting sleeve (42.1, 42.2) at the end remote from the balanced piston,
- in the respective supporting sleeve (42.1, 42.2), the associated closing element (54.1, 54.2) of the corresponding nonreturn valve (69.1, 69.2) is accommodated in such a way that it can be moved longitudinally counter to spring force, coaxially to the balanced piston (41),
- the supporting sleeves (42.1, 42.2) are provided with passages (milled recesses 62, circumferential groove 63, transverse bores 64, longitudinal bore 65) for the compressed air which connect the interior of the guide sleeve (40) to the connection bores (17, 18) for the two service brake circuits (I, II).

3. Multi-circuit protection valve according to Claim 2, characterized in that the nonreturn valves (69.1, 69.2) have a closing element (54.1, 54.2) with a cylindrical stem (55) which is guided longitudinally in the supporting sleeve (42.1, 42.2) and, on its circumference, bears a compression spring (57) which engages, at one end, on the supporting sleeve and, at the other end, on a closing-element sealing part (56) adjacent to the balanced piston.

4. Multi-circuit protection valve according to Claim 3, characterized in that a bottom (59) of the supporting sleeve (42.1, 42.2) forms the stop for the stem (55) of the closing element (54.1, 54.2) of the nonreturn valve (69.1, 69.2).

5. Multi-circuit protection valve according to Claim 1, characterized in that the axial through bore (46) of the balanced piston (41) forms the restrictions (68.1, 68.2).

## Revendications

1. Valve de protection pour plusieurs circuits (10) d'une installation de frein pneumatique à plusieurs circuits, notamment de véhicules automobiles équipés d'au moins deux circuits de frein de fonctionnement (I, II), d'au moins un circuit de frein de parking et/ou d'un circuit auxiliaire (III, IV), tous les circuits étant alimentés respectivement par une soupape de contournement (24.1 à 24.4) en influençant le côté secondaire avec de l'air comprimé, les soupapes de contournement (24.1, 24.2) associées aux circuits de frein de fonctionnement (I, II) étant contournées chacune par une conduite de dérivation (67.1, 67.2) ayant en série, un organe d'étranglement (68.1, 68.2) et une soupape d'arrêt (69.1, 69.2), caractérisée en ce que :
- un perçage (15) dans le corps (11) de la valve de protection pour plusieurs circuits (10), relie la source de fluide sous pression (compresseur d'air 13) aux soupapes de contournement (24.1 à 24.4) communiquant avec un piston flottant (41), avec des ressorts de compression (49.1, 49.2) associés aux deux faces du piston,
- le piston flottant (41) est muni d'un perçage d'alimentation (43), radial, qui débouche dans un perçage traversant axial (46) muni de sièges de soupape (47.1, 47.2) en extrémité, pour un organe d'obturation (54.1, 54.2) des soupapes anti-retour (69.1, 69.2) agissant sur le piston flottant,
- en aval des soupapes anti-retour (69.1, 69.2), il y a à chaque fois une conduite de liaison (66) allant vers les circuits de frein de fonctionnement (I, II),
- un déplacement du piston flottant (41) hors de sa position médiane, étant limité par une butée (fond 59) de l'organe d'obturation (54.1, 54.2) correspondant des soupapes d'arrêt (69.1, 69.2).

2. Valve de protection pour plusieurs circuits selon la revendication 1, caractérisée en ce que :
- le perçage (15) est coupé par un perçage transversal (39) reliant les perçages de raccordement (17, 18) des deux circuits de frein de fonctionnement (I, II),
- le perçage (39) comporte une douille de guidage (40) montée ajustée pour recevoir le piston flottant (41), douille dont le perçage d'alimentation (43) communique avec une ouverture (44) de la douille de guidage située dans la section transversale du perçage (15),
- le piston flottant (41) est guidé mobile longitudinalement dans la douille de guidage (40) par des joints annulaires d'étanchéité (48) prévus de part et d'autre du perçage d'alimentation (43),
- la douille de guidage (40) s'appuie à ses deux extrémités contre des douilles d'appui (42.1, 42.2) vissées dans le perçage transversal (39),
- les ressorts de compression (49.1, 49.2) associés au piston flottant (41) agissent contre la douille d'appui (42.1, 42.2) respective, du côté de la douille non tournée vers le piston flottant,
- chaque douille d'appui (42.1, 42.2) comporte l'organe d'obturation (54.1, 54.2) associé de la soupape d'arrêt (69.1, 69.2) correspondante, de manière coaxiale au piston flottant (41), mobile contre la force d'un ressort,
- les douilles d'appui (42.1, 42.2) sont munies de passages qui relient l'intérieur de la douille de guidage (40) aux perçages de raccordement (17, 18) des deux circuits de frein de fonctionnement (I, II) (les passages sont des fraisages 62, une rainure périphérique 63, des perçages traversants 64, un perçage longitudinal 65) pour l'air comprimé.

3. Valve de protection pour plusieurs circuits selon la revendication 2, caractérisée en ce que les soupapes d'arrêt (69.1, 69.2) ont un organe d'obturation (54.1, 54.2) muni d'un corps cylindrique (55) guidé longitudinalement dans la douille d'appui (42.1, 42.2) et qui porte à sa périphérie un ressort de compression (57) agissant d'un côté contre la douille d'appui et de l'autre côté contre une pièce d'étanchéité (56) de l'organe d'obturation, du côté du piston flottant.

4. Valve de protection pour plusieurs circuits selon la revendication 3, caractérisée en ce qu'un fond (59) de la douille d'appui (42.1, 42.2) forme la butée pour le corps (55) de l'organe d'obturation (54.1, 54.2) de la soupape d'arrêt (69.1, 69.2).

5. Valve de protection pour plusieurs circuits selon la revendication 1, caractérisée en ce que le perçage traversant (46), axial, du piston flottant (41) forme les organes d'étranglement (68.1, 68.2).
